# EUROPÄISCHE PATENTANMELDUNG

(11) **EP 0 895 321 A2**
(43) Veröffentlichungstag der Anmeldung: **03.02.1999**
(21) Anmeldenummer: 98112447.2
(22) Anmeldetag: 06.07.1998
(51) Int. Cl.: H01R 43/00

(54) **Vorrichtung zur thermischen Beaufschlagung eines Schrumpfschlauches, insbesondere für die Konfektionierung von Kabeln der Elektrotechnik, der Elektronik und der Fernmeldetechnik**

(30) Priorität: 29.07.1997 DE 29713501 U
(71) Anmelder: GRÄSSLIN KG, D-78112 St. Georgen (DE)
(72) Erfinder: Kölle, Rolf, 78112 St. Georgen (DE)
(74) Vertreter: Thoma, Friedrich, Dipl.-Ing.(FH)

(57) **Zusammenfassung**

Bei einer Vorrichtung zur thermischen Beaufschlagung eines Schrumpfschlauches (6), insbesondere für die Konfektionierung von Kabeln (5) der Elektrotechnik, der Elektronik und der Fernmeldetechnik, mit einer Schrumpfwärme emittierenden Wärmequelle (1), ist als Wärmequelle eine Laserstrahlwärmequelle (1) vorgesehen.

## Beschreibung

Die Erfindung betrifft eine Vorrichtung zur thermischen Beaufschlagung eines Schrumpfschlauches, insbesondere zur Konfektionierung von Kabeln der Elektrotechnik, der Elektronik und der Fernmeldetechnik, mit den Merkmalen nach dem Oberbegriff des Schutzanspruchs 1.

Bei einer Vielzahl von Verkabelungstechniken, insbesondere im elektrischen, elektromechanischen, elektronischen und/oder fernmeldetechnischen Maschinen- und Gerätebau, ist es bei der Konfektionierung der dort vorgesehenen, insbesondere flexiblen, Einzelkabel und/oder Kabelbäumen erforderlich, daß die einzelnen Kabel bzw. Kabelenden nicht nur farblich zueinander abgestuft, sondern auch mit Ziffern, Symbolen oder sonstigen Kennzeichnungen adressiert sind. Derartige Kennzeichnungen bzw. Adressierungen werden zweckmäßigerweise auf sogenannte Schrumpfschlauchabschnitte aufgedruckt, die manuell oder maschinell auf die einzelnen Kabel, insbesondere auf deren jeweilige Kabelenden thermisch, durch Beaufschlagung mittels einer geeigneten Wärmequelle kraftschlüssig nicht lösbar aufgeschrumpft werden. Dabei soll sichergestellt sein, daß die vorgesehene Wärmequelle nicht nur relativ schnell die erforderliche thermische Schrumpfleistung erzeugt, sondern auch, daß die thermische Schrumpfleistung relativ einfach und präzise auf den jeweiligen Schrumpfschlauchgegenstand ausrichtbar ist, um insbesondere bei einer maschinellen Kabelkonfektionierung, bei kleinstmöglicher thermischer Leistung, einen relativ hohen Fertigungsgrad mit größtmöglicher Kabelkonfektionierungsgeschwindigkeit zu erzielen.

Es ist in der manuellen und maschinellen Konfektionierung von Kabeln für die Elektrotechnik, der Elektronik und der Telekomunikationstechnik bekannt, kabelendseitig Schrumpfschläuche zur einzelnen Kabelkennzeichnung bz. -adressierung, thermisch, unter Einsatz einer mittelbar oder unmittelbar wirkenden Wärmequelle aufzuschrumpfen. Die dort zum Einsatz kommenden, insbesondere mittels Heißluft wirkenden, Wärmequellen sind mit dem erheblichen Nachteil behaftet, daß überwiegend nur ein Bruchteil des Heißluftstroms technisch ausgenutzt wird, wobei ein Teil des Heißluftstromes am Umfang des Schrumpfgegenstand abprallt, der das Schrumpfgegenstandsumfeld unnötig aufheizt. Außerdem ist bei einem Teil der bekanntgewordenen Kabelkonfektionierungsmaschinen mit derartigen Heißluftquellen zur Beaufschlagung von Schrumpfschläuchen der Arbeitstakt beim Aufschrumpfen eines Kennzeichnungsschlauches auf ein Kabel, bei relativ hohem thermischem Energieverbrauch, zeitlich verhältnismäßig lang (DE-PS 44 13 577).

Der Erfindung liegt die Aufgabe zugrunde, eine Vorrichtung zur thermischen Beaufschlagung von Schrumpfschläuchen, für den Einsatz in der Verkabelungstechnik, insbesondere für die Kabelkonfektionierung der Elektrotechnik, der Elektronik und der Fernmeldetechnik zu schaffen, die die Nachteile der bekannten Wärmequelle beseitigt, und deren thermischer Energiestrahl nicht nur präzise auf ein Kabel und den dort thermisch aufzuschrumpfenden Schlauch relativ einfach ausrichtbar ist, sondern auch, daß der thermische Energiestrahl bei geringstem Energieaufwand schnell und hochwirksam ist, zur Erzielung eines rationellen und wirtschaftlichen Fertigungsflusses.

Diese Aufgabe wird mit den Merkmalen im kennzeichnenden Teil des Patentanspruchs 1 gelöst und in den Unteransprüchen sind weitere vorteilhafte Einzelheiten beansprucht.

Vorteilhaft beim Einsatz einer Laserstrahlwärmequelle zum Aufschrumpfen eines Schrumpfschlauches auf ein derartiges Kabel ist nicht nur, daß der thermisch hochenergiereiche, äußerst intensiv wirksame Laserstrahl, teilsweise unmittelbar und teilweise mit technisch relativ einfachen Mitteln, insbesondere mittels eines mechanischen Reflektors, präzise auf den gesammten Umfang eines Schrumpfschlauches fokusierbar ist, um dadurch eine hinreichend gleichmäßige Erhitzung eines Schrumpfschlauches sicherzustellen, sondern auch, daß durch den Einsatz einer Laserstrahlwärmequelle eine zeitlich äußerst schnelle und gezielte Erhitzung, bei geringster Streustrahlung erzielbar ist und dadurch eine relativ schnelle Arbeitstaktfolge bei geringstem Primärenergieverbrauch erzielt wird.

Zweckmäßigerweise wird ein Kohlendioxid-Laser, ein sogenannter CO₂-Laser mit einer Leistung von ca. 15 Watt eingesetzt. Für bestimmte derartige Einsatzfälle ist es jedoch auch vorgesehen, andere geeignete Laser, insbesondere Halbleiter- oder sogenannte Dioden-Laser, einzusetzen.

Vorteilhaft ist ferner das mit einer derartigen Vorrichtung erzielbare berührungslose Aufschrumpfen eines bedruckten bzw. beschrifteten Schrumpfschlauches auf ein Kabel. Damit wird sichergestellt, daß die Bedruckung bzw. Beschriftung auf dem Schrumpfschlauch beim Aufschrumpfen nicht verwischt wird.

Von Vorteil ist außerdem der relativ kleine Raumbedarf der Laserstrahlwärmequelle und die dadurch erzielbare kompakte, insbesondere modulare, Ausführbarkeit der neuen Vorrichtung, die eine äußerst geringe Umfelderwärmung durch die dort vernachlässigbare thermische Streustrahlung verursacht.

Ein Ausführungs- und Anwendungsbeispiel der neuen Vorrichtung ist in den Zeichnungen dargestellt und wird im folgenden näher erläutert. Es zeigen
- Fig. 1: eine schaubildliche Funktionsanordnung einer Vorrichtung zur thermischen Beaufschlagung eines Schrumpfschlauches auf ein Elektrokabels mittels einer Laserstrahlwärmequelle,
- Fig. 2: eine Draufsicht auf die Vorrichtung nach Fig. 1 und
- Fig. 3: eine schaubildliche Ansicht einer maschinellen Kabelkonfektionierungseinheit mit einer Laserstrahlwärmequelle.

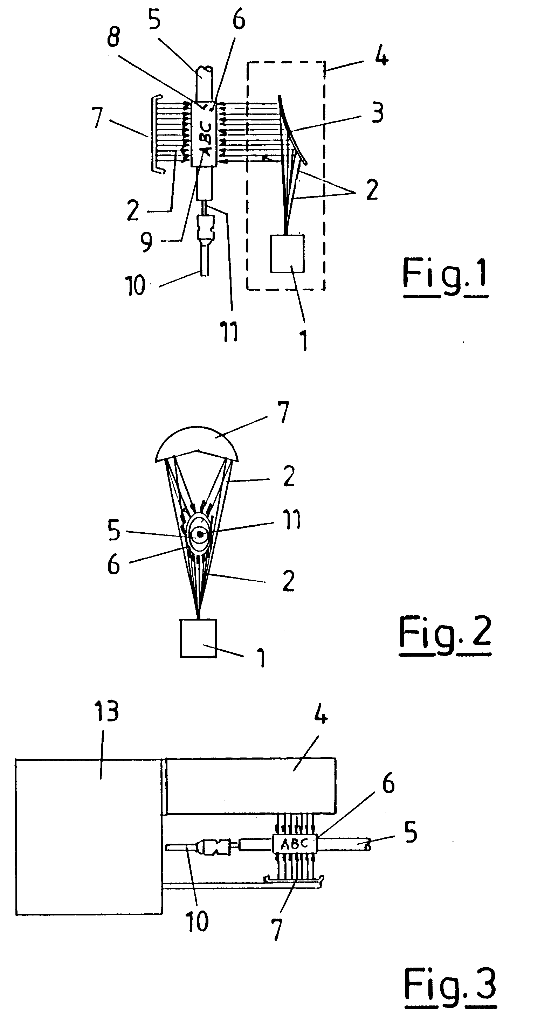

Die in den Fig. 1 und 2 dargestellte Vorrichtung besteht im wesentlichen aus der Laserstrahlwärmequelle 1, insbesonder, mit einem sogenannten CO₂-Laser, deren relativ scharf gebündelter Laserstrahl 2 über einen, insbesondere doppelkonvex ausgebildeten, Spiegel 3 auf den, auf einem Elektrokabel 5 lose aufgeschobenen, insbesondere beschrifteten, Schrumpfschlauch 6 gerichtet ist. 7 bedeutet einen, insbesondere stumpfwinkelig oder konkav ausgebildeten, Reflektor, der die Aufgabe hat, den, von den die Schrumpfwärme erzeugenden Laserstrahlen 2 nicht unmittelbar beaufschlagten, Umfangsflächenbereich 8 mittelbar mit einer entsprechend gebündelten thermischen Laserstrahlenergie zu beaufschlagen. In diesem Zusammenhange ist es auch vorgesehen, daß der Reflektor 7 aus zwei Einzelreflektoren gebildet ist, die in einem zweckmäßigen Winkel zueinander angeordnet sind.

9 bezeichnet die, auf dem Schrumpfschlauch 6 aufgedruckte, Beschriftung insbesondere eine Kabeladresse. 10 kennzeichnet einen, auf dem Leiterende 11 des Kabels 5 aufgepreßten, Kabelschuh. Die Laserstrahlwärmequelle 1 bildet zweckmäßigerweise zusammen mit dem Spiegel 3 eine modulare Baueinheit 4.

Wie aus der Fig. 3 ersichtlich wird, ist die in den Fig. 1 und 2 dargestellte Vorrichtung, in der Ausführung einer modularen Baueinheit 4, einer, insbesondere vollautomatisch arbeitenden, Kabelkonfektionierungsmaschine 13 funktionskonform zugeordnet. 5 bezeichnet dort das zu konfektionierende Elektrokabel und 6 bedeutet den adressierten, auf das Kabel 5 thermisch aufzuschrumpfenden, Schrumpfschlauch.

Es liegt im Rahmen der Erfindung, daß mit einer derartigen Laserstrahlwärmequelle 1 auch Schrumpfschläuche 6 auf nichtelektrische Kabel, Drähte und/oder Seile oder dergleichen aufschrumpfbar sind. Außerdem können mit einer derartigen Laserstrahlwärmequelle 1, insbesondere beschriftete und/oder graphisch oberflächengestaltete, Schrumpfschläuche 6 zweckmäßig auf Gebrauchsgegenstände, beispielsweise auf Schreibgeräte, Spielzeug oder dergleichen, rationell und wirtschaftlich aufgeschrumpft werden.

Die neue Vorrichtung beschränkt sich nicht nur auf das Aufschrumpfen von Schrumpfschläuchen 6 auf die oben erwähnten Gegenstände, sondern es ist vorgesehen, daß damit auch insbesondere flächige Einzelteile, z.B. Etiketten oder dergleichen Beschriftungs- oder Reklameträger, auf einen Gegenstand aufschrumpfbar oder stoffschlüssig aufschweißbar sind.

## Patentansprüche

1. Vorrichtung zur thermischen Beaufschlagung eines Schrumpfschlauches (6), insbesondere für die Konfektionierung von Kabeln (5) der Elektrotechnik, der Elektronik und der Fernmeldetechnik, mit einer Schrumpfwärme emittierenden Wärmequelle (1), **dadurch gekennzeichnet**, daß als Wärmequelle eine Laserstrahlwärmequelle (1) vorgesehen ist.

2. Vorrichtung nach Anspruch 1, dadurch gekennzeichnet, daß als Laserstrahlwärmequelle (1) ein Kohlendioxid-Laser oder CO₂-Laser vorgesehen ist.

3. Vorrichtung nach Anspruch 1 und 2, dadurch gekennzeichnet, daß der Laserstrahl (2) den über ein Kabel (5) gestülpten Schrumpfschlauch (6) teilweise unmittelbar über einen Spiegel (3) und teilweise mittelbar über einen Reflektor (7) thermisch beaufschlagt.

4. Vorrichtung nach Anspruch 1 bis 3, dadurch gekennzeichnet, daß der Spiegel (3) doppelkonvex ausgebildet ist.

5. Vorrichtung nach Anspruch 1 bis 4, dadurch gekennzeichnet, daß der Reflektor (7) stumpfwinkelig oder konkav ausgebildet ist.

6. Vorrichtung nach Anspruch 1 bis 4, dadurch gekennzeichnet, daß der Reflektor (7) aus zwei Einzelreflektoren gebildet ist.

7. Vorrichtung nach Anspruch 1 bis 6, dadurch gekennzeichnet, daß der Schrumpfschlauch (6) im Laserstrahl (2) zwischen dem Spiegel (3) und dem Reflektor (7) verlaufend angeordnet ist.

8. Vorrichtung nach Anspruch 1 bis 7, dadurch gekennzeichnet, daß die Vorrichtung mit der Laserstrahlwärmequelle (1) und dem Spiegel (3) als modulare Baueinheit (4) ausgebildet ist.
